(19) **Europäisches Patentamt / European Patent Office / Office européen des brevets**

(11) **EP 3 540 537 B1**

(12) **EUROPEAN PATENT SPECIFICATION**

(45) Date of publication and mention
of the grant of the patent:
**18.11.2020 Bulletin 2020/47**

(51) Int Cl.:
**G05B 19/18** *(2006.01)*          **G05B 19/418** *(2006.01)*
**G05B 19/414** *(2006.01)*

(21) Application number: **19151163.3**

(22) Date of filing: **10.01.2019**

(54) **CONTROL DEVICE, CONTROL METHOD, AND PROGRAM**

STEUERUNGSVORRICHTUNG, STEUERUNGSVERFAHREN UND PROGRAMM

PROCÉDÉ, DISPOSITIF ET PROGRAMME DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2018 JP 2018044549**

(43) Date of publication of application:
**18.09.2019 Bulletin 2019/38**

(73) Proprietor: **OMRON Corporation
Shiokoji-dori, Shimogyo-Ku
Kyoto-shi
Kyoto 600-8530 (JP)**

(72) Inventors:
• **KOGAWARA, Toru**
**Kyoto-shi, Kyoto 600-8530 (JP)**
• **SHIMAMURA, Junji**
**Kyoto-shi, Kyoto 600-8530 (JP)**

(74) Representative: **Becker & Kurig Partnerschaft
Patentanwälte PartmbB
Bavariastrasse 7
80336 München (DE)**

(56) References cited:
**EP-A1- 2 667 145     EP-A1- 3 282 220**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND

Technical Field

The present disclosure relates to a control device, and more specifically, to a control device which synchronizes and controls a master device and a slave device. In addition, the present invention relates to a control method and a program for performing such control.

Description of Related Art

As a conventional control device of this type, for example, a device which adds, as a correction amount (correction synchronization data), synchronization data to a position command value for a slave device in order to perform a coordinated operation of a master device (coordination reference) and the slave device (control target) as disclosed in Patent Document 1 (Japanese Patent Application Laid-Open No. H06-138920) is known.

[Literature Documents]

[Patent Documents]

[Patent Document 1] Japanese Patent Application Laid-Open No. H06-138920
See also publication EP 3 282 220.

## SUMMARY

[Problems to be solved]

Distinguished from the conventional example, the applicant has developed a method of synchronizing a master device with a slave device to control the master device and the slave device by obtaining a command value for each axis of the slave device through an arithmetic operation at a fixed period (e.g., an period of about 0.5 msec to 1 msec) based on a command value for each axis (which refers to a "control axis" throughout the description) of the master device. Accordingly, it is possible to synchronize the master device with the slave device with high accuracy.
In a case in which the master device and the slave device are synchronized with each other to be controlled at a fixed period in this manner, when the number of axes of the master device differs from that of the slave device, it is necessary to perform coordinate transformation from the coordinate system of the master device into the coordinate system of the slave device in addition to a synchronization operation for maintaining the position of the master device and the position of the slave device in a predetermined corresponding relation in a process of obtaining a command value to each axis of the slave device according to a command value to each axis of the master device (or a measured current value of each axis).
Here, assuming that the coordinate transformation is performed after the synchronization operation, if the number of axes of the master device is less than the number of axes of the slave device, for example, a problem that a degree of freedom of the position (trajectory) of the slave device decreases occurs because a degree of freedom of a result value obtained through the synchronization operation is relatively low. On the other hand, if the number of axes of the master device is greater than the number of axes of the slave device, a problem that the amount of calculations for the synchronization operation increases occurs because the number of axes of the master device is relatively large.
Accordingly, an objective of the present invention is to provide a control device which synchronizes and controls a master device and a slave device at a fixed period, and is able to increase a degree of freedom of the position of the slave device or decrease the amount of calculations for a synchronization operation when the number of axes of the master device differs from the number of axes of the slave device. In addition, an objective of the present invention is to provide a control method and a program for such a control device.

[Means to Solve Problems]

To accomplish the objective, a control device of the present disclosure is a control device for synchronizing and controlling a master device and a slave device at a fixed period when the number of axes of the master device differs from the number of axes of the slave device, the control device including: a computing unit which obtains a command value for each axis of the slave device through computation at the fixed period based on a command value for each axis or a measured current value of each axis of the master device, wherein the computing unit includes: a coordinate transformation unit which performs coordinate transformation from a coordinate system of the master device into a coordinate system of the slave device for the command value for each axis or the measured current value of each axis of the master device at the fixed period; and a synchronization computing unit which performs synchronization computation for maintaining the position of the master device and the position of the slave device in a predetermined corresponding relation for coordinate transformation result values obtained through the coordinate transformation.
In the present description, "axes" of a master device and a slave device refers to control axes. For example, devices having various numbers of axes, such as a 1-axis device like a conveyor belt, a 2-axis device like an X-Y table, a 4-axis device like a 4-axis parallel link robot, a 5-axis device like a 5-axis horizontal articulated robot, and a 6-axis device like a 6-axis articulated robot, can be objects serving as a master device and a slave device. However, the present invention is applied in cases in which the number of axes of a master device differs from the number of axes of a slave device.

"Coordinate transformation" represents transformation from a position based on a coordinate system (e.g., XYZ coordinate system) of the master device into a position based on a coordinate system (e.g., xyz coordinate system) of the slave device. For example, when positional changes of the master device correspond to a diagonal vector (in which any of x, y and z components is not zero) in the xyz coordinate system of the slave device, "coordinate transformation" corresponds to obtaining projection (x, y and z components) of the vector.

"Synchronization computation" refers to computation performed at the fixed period to maintain the position of the master device and the position of the slave device in a predetermined corresponding relation. The "predetermined corresponding relation" represents a relation in which the position of the slave device simply follows the x axis and the y axis and moves up and down in accordance with a certain cam curve with respect to the z axis for the position of the master device. The meaning of "positions" of the master device and the slave device includes a translation component and/or a rotation component.

In the control device of the present disclosure, the computing unit obtains a command value for each axis of the slave device through computation at a fixed period based on a command value for each axis or a measured current value of each axis of the master device. In this procedure, the coordinate transformation unit of the computing unit performs coordinate transformation from the coordinate system of the master device into the coordinate system of the slave device for the command value for each axis or the measured current value of each axis of the master device at the fixed period. Thereafter, the synchronization computing unit of the computing unit performs synchronization computation for maintaining the position of the master device and the position of the slave device in a predetermined corresponding relation for coordinate transformation result values obtained through the coordinate transformation. Accordingly, a command value for each axis of the slave device is obtained. Hence, when the number of axes of the master device is less than the number of axes of the slave device, for example, a degree of freedom of the coordinate transformation result values can be increased to the number of axes of the slave device with respect to a degree of freedom of the command value for each axis (or a measured current value of each axis) of the master device and thus a degree of freedom of the position (trajectory) of the slave device can be improved. Accordingly, the position (trajectory) of the slave device can be relatively freely designed when the synchronization computation is performed. On the other hand, when the number of axes of the master device is larger than the number of axes of the slave device, the amount of calculations for the synchronization computation is reduced because the number of axes of the slave device is relatively small. In this manner, according to the control device of the present disclosure, it is possible to increase a degree of freedom of the position of the slave device or to reduce the amount of calculations for synchronization computation when the number of axes of the master device differs from the number of axes of the slave device.

In another aspect, a control method of the present disclosure is a control method for obtaining a command value for each axis of a slave device through computation at a fixed period based on a command value for each axis or a measured current value of each axis of a master device and synchronizing and controlling the master device and the slave device when the number of axes of the master device differs from the number of axes of the slave device, the control method including: performing coordinate transformation from a coordinate system of the master device into a coordinate system of the slave device for the command value for each axis or the measured current value of each axis of the master device at the fixed period; and then performing synchronization computation for maintaining the position of the master device and the position of the slave device in a predetermined corresponding relation for coordinate transformation result values obtained through the coordinate transformation.

According to the control method of the present disclosure, it is possible to increase a degree of freedom of the position of the slave device or to reduce the amount of calculations for synchronization computation when the number of axes of the master device differs from the number of axes of the slave device.

In another aspect, a program of the present disclosure is a program causing a computer to execute the aforementioned control method.

It is possible to implement the aforementioned control method by causing a computer to execute the program of the present disclosure.

[Effect]

As is apparent from the above description, according to the control device, the control method and the program of the present disclosure, it is possible to increase a degree of freedom of the position of the slave device or reduce the amount of calculations for the synchronization computation when the number of axes of the master device differs from the number of axes of the slave device.

**BRIEF DESCRIPTION OF THE DRAWINGS**

FIG. 1 is a diagram showing a block configuration when a control device of an embodiment of the present invention is applied to a certain control system.

FIG. 2 is a diagram schematically showing the exterior of the control system.

FIG. 3 is a diagram explaining an operation performed by a central computing unit of the control device in the control system as an operation example in a control method of an embodiment of the present invention.

FIG. 4 is a diagram showing a block configuration when the control device is applied to another control system.

FIG. 5 is a diagram schematically showing the exterior of the control system.

FIG. 6 is a diagram explaining an operation performed by the central computing unit of the control device in the control system as another operation example in the control method of an embodiment of the present invention.

**DESCRIPTION OF THE EMBODIMENTS**

Hereinafter, embodiments of the present invention will be described in detail with reference to the drawings.

(First embodiment)

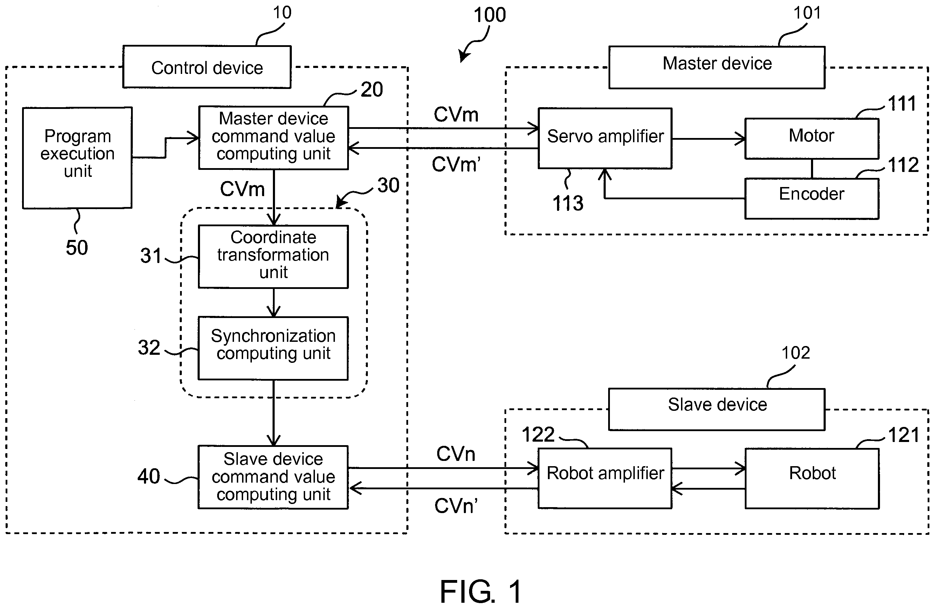

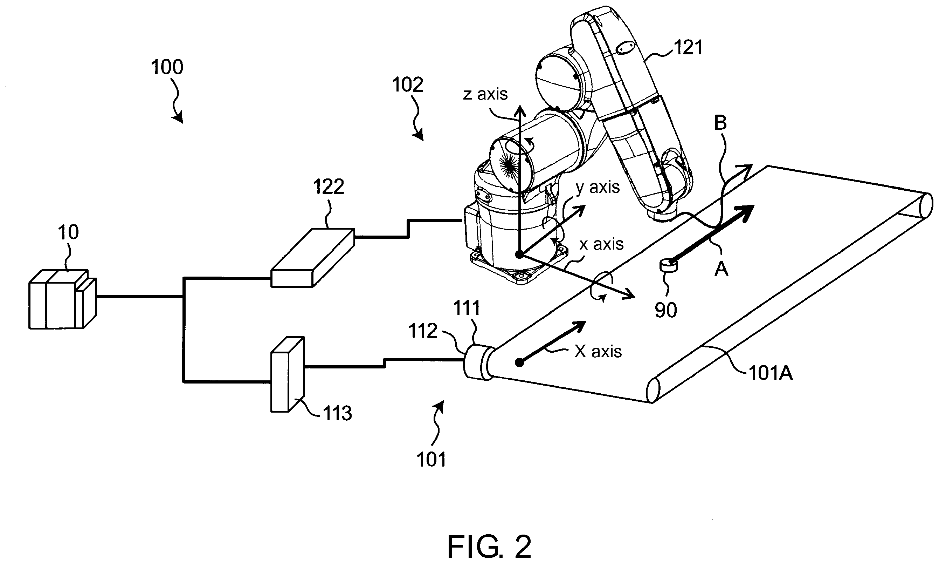

FIG. 1 is a diagram showing a block configuration when a control device 10 of an embodiment of the present invention is applied to a certain control system 100. In addition, FIG. 2 is a diagram schematically showing the exterior of the control system 100. As shown in these figures, the control system 100 roughly includes a master device 101 as a 1-axis device, a slave device 10 as a 6-axis device, and the control device 10 that synchronizes and controls the master device 101 and the slave device 102 at a fixed period t (e.g., a period of about 0.5 msec to 1 msec).

As shown in FIG. 2, the master device 101 is a conveyor belt in this example and includes a motor 111 which drives a belt 101A in the X-axis direction according to a command value CVm from the control device 10, an encoder 112 which is integrated with the motor 111 and measures a current value (current position) CVm' of the motor 111, and a servo amplifier 113 which drives the motor 111 based on signals representing the command value CVm from the control device 10 and the current value CVm' from the encoder 112. A work object (hereinafter referred to as a "workpiece") 90 on the belt 101A moves in the X-axis direction as represented by an arrow A.

The slave device 102 includes a 6-axis articulated robot 121 and a robot amplifier 122 which drives the robot 121 according to a signal representing a command value CVn from the control device 10 in this example.

In this example, the master device 101 has a degree of freedom of 1 axis (X axis). The slave device 102 has a degree of freedom of 6 axes of x, y, z, yaw, pitch and roll. That is, the number m of axes of the master device 101 (m=1 in this example) is less than the number n of axes of the slave device (102) (n=6 in this example), i.e., m<n. In addition, the X axis of the master device 101 does not coincide with any of the x, y and z axes of the slave device 102 in this example. Accordingly, a variation in a position X (or a synchronization computation result value which will be described later) of the master device 101 corresponds to a diagonal vector (in which any of x, y and z components is not zero) in the xyz coordinate system of the slave device 102.

As shown in FIG. 1, the control device 10 includes a program execution unit 50 which executes a program designated by a user, a master device command value computing unit 20, a central computing unit 30, and a slave device command value computing unit 40. In this example, the master device command value computing unit 20, the central computing unit 30 and the slave device command value computing unit 40 constitute a computing unit.

The master device command value computing unit 20 receives an instruction from the program execution unit 50 and computes and generates command values (master device command values) CVm for the master device 101, which are composed of elements of the same number m as the number m of axes, in order to control the master device 101 having a number m of axes (m=1 in this example). Signals representing the master device command values CVm are transmitted to the master device 101. The servo amplifier 113 of the master device 101 reflects a current value CVm' from the encoder 112 to update the command value CVm at a fixed period t so as to drive the motor 111. The current value CVm' is transmitted to the master device command value computing unit 20. In this manner, the master device 101 is controlled by the control device 10 (particularly, the master device command value computing unit 20).

The slave device command value computing unit 40 receives an instruction from a synchronization instruction unit which is not shown and computes and generates command values (slave device command value) CVn for the slave device 102, which are composed of elements of the same number n as the number n of axes, based on synchronization computation result values which will be described later in order to control the slave device 102 having the number n of axes (n=6 in this example). Signals representing the slave device command value CVn are transmitted to the slave device 102. The robot amplifier 122 of the slave device 102 reflects a current value CVn' of each axis from the robot 121 to update the command value CVn at the fixed period t so as to drive the robot 121. The current value CVn' is transmitted to the slave device command value computing unit 40. In this manner, the slave device 102 is controlled by the control device 10 (particularly, the slave device command value computing unit 40).

The central computing unit 30 includes a coordinate transformation unit 31 and a synchronization computing unit 32. Next, the operation of the control device 10 (particularly, the central computing unit 30) in the control system 100 will be described as an operation example of a control method of an embodiment.

The coordinate transformation unit 31 performs coordinate transformation (which is represented as a sign S1) from the XYZ coordinate system (X coordinate in this example) of the master device 101 into the xyz coordinate system of the slave device 102 for the command value CVm for each axis (X axis in this example) (or a measured current value CVm' of each axis) of the master device 101 at the fixed period t.

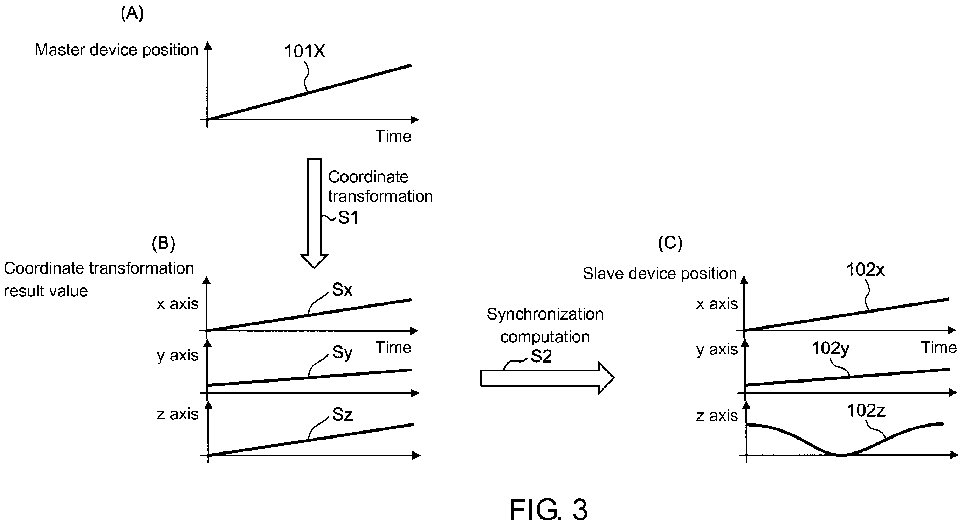

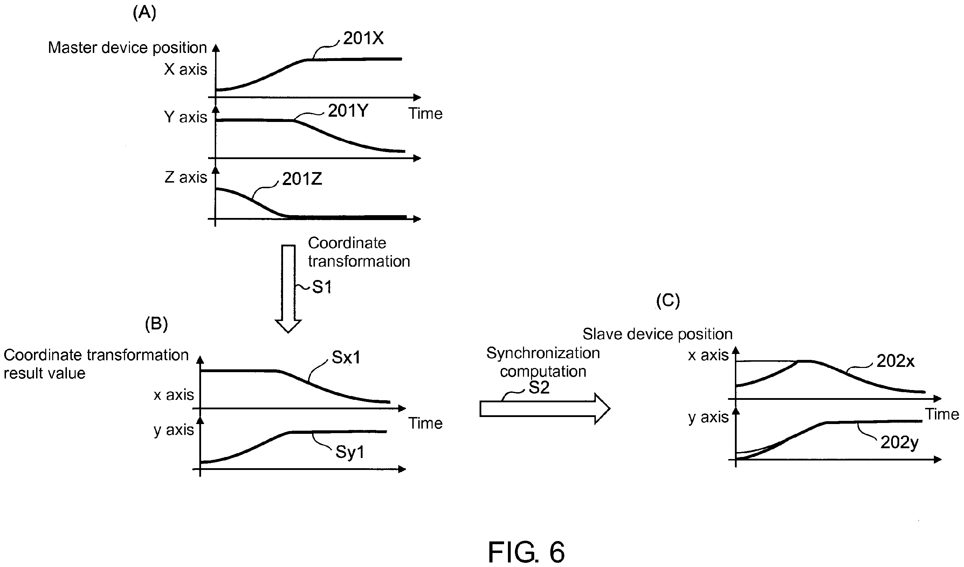

For example, it is assumed that a position (X-axis position) 101X of the master device 101 increases linearly with the lapse of time, as shown in (A) of FIG. 3. Further, since the display scale of the time axis (horizontal axis) is considerably larger than the period t in (A) of FIG. 3 and subsequently described (B) and (C) of FIG. 3, a step-like change in the graph for each period t is not shown (the same applies to (A) of FIG. 6 to (C) of FIG. 6, which will be described later). As described above, changes in the position X of the master device 101 correspond to a diagonal vector (any of x, y and z components is not zero) in the xyz coordinate system of the slave device 102 in this example. The coordinate transformation unit 31 obtains projection (x, y and z components) of the vector as shown in (B) of FIG. 3. Specifically, when the position (X-axis position) 101X of the master device 101 is set to p, projected components Sx, Sy and Sz are obtained according to the following equations (Eq. 1).

$$Sx = K_x \times p + O_x$$
$$Sy = K_y \times p + O_y$$
$$Sz = K_z \times p + O_z \qquad \dots (Eq.\ 1)$$

(Here, $K_x$, $K_y$ and $K_z$ represent coefficients of the axes and $O_x$, $O_y$ and $O_z$ represent offset values of the axes.)

Meanwhile, as can be understood from the equations (Eq. 1), changes in the position X of the master device 101 may correspond to a vector parallel to any of the xy plane, yz plane and zx plane in the xyz coordinate system of the slave device 102 or correspond to a vector parallel to any of the x axis, y axis and z axis. In such cases, one or two of the coefficients $K_x$, $K_y$ and $K_z$ become zero.

Thereafter, the synchronization computing unit 32 performs synchronization computation (which is represented as a sign S2) for maintaining the position of the master device 101 and the position of the slave device 102 in a predetermined corresponding relation for coordinate transformation result values (Sx, Sy and Sz) obtained by the coordinate transformation S1.

In this example, it is assumed that the predetermined corresponding relation is a relation in which the position of the slave device 102 simply follows the x axis and y axis and moves up and down with respect to the z axis in accordance with a certain cam curve q=f(Sz) according to changes in the position (X-axis position) 101X of the master device 101. Here, result values from the synchronization computation S2 are obtained as represented by straight lines 102x and 102y and a curve 102z in (C) of FIG. 3, for example. The straight lines 102x and 102y and the curve 102z respectively represent positions to be taken by the x axis, y axis and z axis of the slave device 102.

Thereafter, the slave device command value computing unit 40 receives signals representing the straight lines 102x and 102y and the curve 102z from the synchronization computing unit 32 and updates the command value CVn for each axis of the slave device 102.

In this example, the slave device 102 receives signals representing the command values CVn through the robot amplifier 122, performs simple follow-up with respect to the x axis and the y axis and moves up and down in accordance with the cam curve q=f(Sz) with respect to the z axis in synchronization with changes (i.e., movement of the workpiece 90 represented by an arrow A) in the position of the master device 101, as represented by an arrow B in FIG. 2.

In the case of this operation, when the number m of axes (m=1 in this example) of the master device 101 is less than the number n of axes (n=6 in this example) of the slave device 102 as in this example, a degree of freedom of the coordinate transformation result values (Sx, Sy and Sz) can be increased to the number n of axes of the slave device 102 with respect to a degree of freedom of the command value CVm for each axis (X axis in this example) (or a measured current value CVm' of each axis) of the master device 101 and thus a degree of freedom of the position (trajectory) of the slave device 102 is increased. Accordingly, it is possible to relatively freely set the position (trajectory) of the slave device 102 when the synchronization computation S2 is performed.

(Second embodiment)

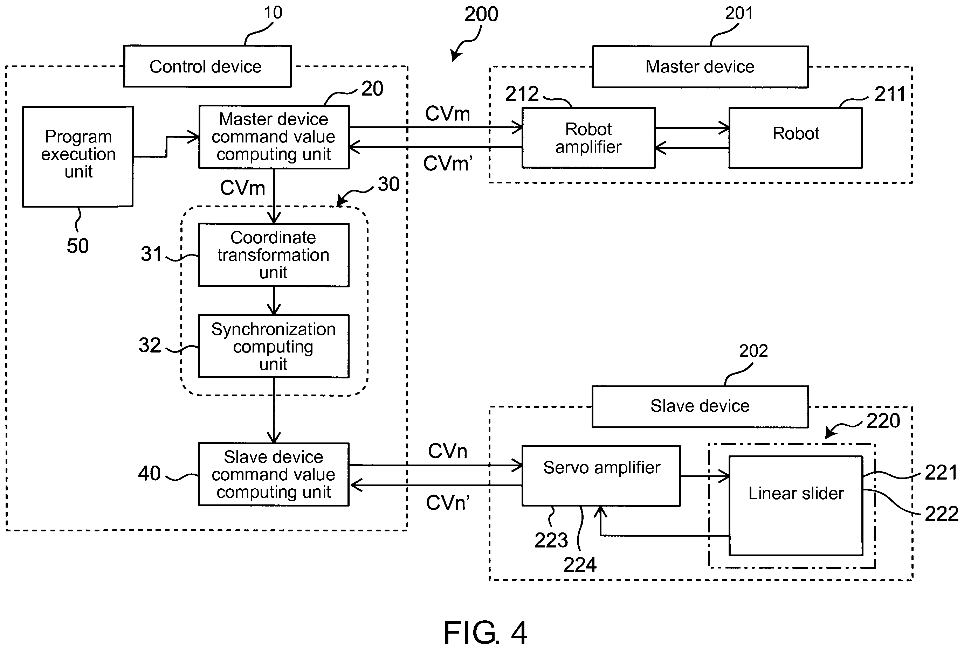

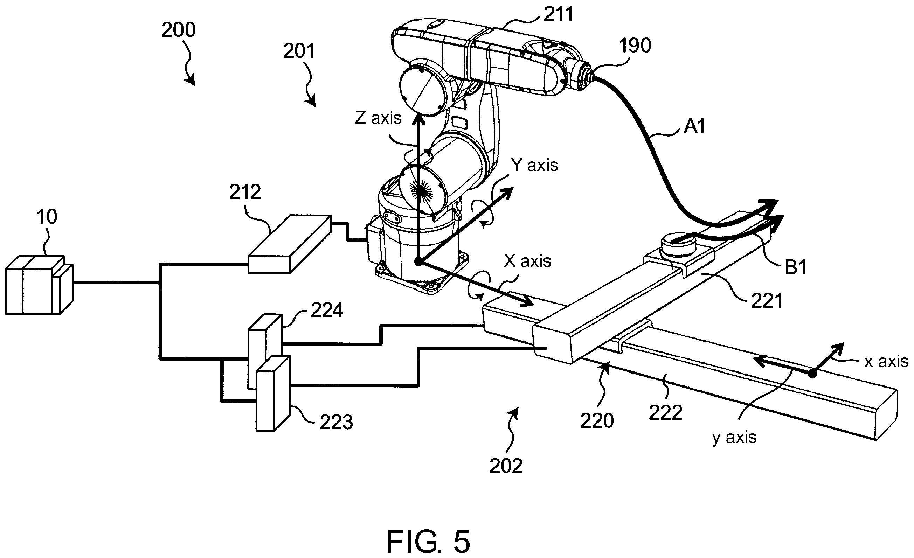

FIG. 4 is a block diagram when the above-described control device 10 is applied to a control system 200. In addition, FIG. 5 schematically shows the exterior of the control system 200. As shown in these figures, the control system 200 roughly includes a master device 201 as a 6-axis device, a slave device 202 as a 2-axis device, and the aforementioned control device 10. In this example, the control device 10 synchronizes and controls the master device 201 and the slave device 202 at a fixed period t (e.g., t is a period of about 0.5 msec to 1 msec).

As shown in FIG. 5, the master device 201 includes a 6-axis articulated robot 211 and a robot amplifier 212 which drives the robot 211 according to a signal representing a command value CVm from the control device 10 in this example. The robot amplifier 212 transmits a signal representing a measured current value CVm' of each axis (X, Y, Z, Yaw, Pitch and Roll in this example) of the robot 211 to the master device command value computing unit 20 of the control device 10. In this example, a workpiece 190 gripped by the robot 211 is moved along a curve as represented by an arrow A1.

In this example, the slave device 202 is an X-Y table 220, and includes two linear sliders 221 and 222 integrated with a motor or an encoder, and two servo amplifiers 223 and 224 which respectively drive the linear sliders 221 and 222 according to signals representing command values CVn from the control device 10.

The control device 10 is configured in the same manner as in the aforementioned example. In this example, the master device command value computing unit 20 receives an instruction from the program execution unit 50 and computes and generates command values (master device command value) CVm for the master device 201, which are composed of elements of the same number m as the number m of axes, in order to control the master device 201 having the number m (m=6 in this example) of axes. Signals representing the master device command values CVm are transmitted to the master device 201. The robot amplifier 212 of the master device 201 reflects a current value CVm' of each axis from the robot 211 to update the command value CVm at a fixed period t so as to drive the robot 211. The current value CVm' is transmitted to the master device command value computing unit 20. In this manner, the master device 201 is controlled by the control device 10 (particularly, the master device command value computing unit 20).

The slave device command value computing unit 40 receives an instruction from a synchronization instruction unit which is not shown and computes and generates command values (slave device command value) CVn for the slave device 202, which are composed of elements of the same number n as the number n of axes, based on the subsequently described synchronization computation result values in order to control the slave device 202 having the number n of axes (n=2 in this example). Signals representing the slave device command value CVn are transmitted to the slave device 202. The servo amplifiers 223 and 224 of the slave device 202 reflect a current value CVn' of each axis from the linear sliders 221 and 222 to update the slave device command value CVn of each axis (x and y axes in this example) at the fixed period t so as to drive the linear sliders 221 and 222. The current value CVn' is transmitted to the slave device command value computing unit 40. In this manner, the slave device 202 is controlled by the control device 10 (particularly, the slave device command value computing unit 40).

In this example, the master device 201 has degrees of freedom of 6 axes of X, Y, Z, Yaw, Pitch and Roll. The slave device 202 has degrees of freedom of 2 axes (x and y axes). That is, the number m of axes of the master device 201 (m=6 in this example) is larger than the number n of axes of the slave device 202 (n=2 in this example), i.e., m>n. In addition, the 6 axes of X, Y, Z, Yaw, Pitch and Roll, of the master device 101 are not consistent with any of the x and y axes of the slave device 202 in this example.

Next, the operation of the control device 10 (particularly, the central computing unit 30) in the control system 200 will be described as another operation example of the control method of an embodiment.

The coordinate transformation unit 31 performs coordinate transformation (which is represented as a sign S1) from the XYZ coordinate system of the master device 201 into the xyz coordinate system of the slave device 202 for the command values CVm for respective axes (X, Y, Z, Yaw, Pitch and Roll in this example) (or measured current values CVm' of the respective axes) of the master device 201 at the fixed period t.

For example, it is assumed that the X-axis position 201X, Y-axis position 201Y and Z-axis position 201Z of the master device 201 changes with the lapse of time, as shown in (A) of FIG. 6. In this example, the X-axis position 201X increases first and then becomes constant midway. The Y-axis position 201Y is constant first and then decreases midway. The Z-axis position 201Z decreases first and then becomes constant (approximately zero) midway. In this example, the coordinate transformation unit 31 obtains x and y components (which are set to Sx1 and Sy1) in the coordinate system of the slave device 202 according to the following equations (Eq. 2) using the X-axis position 201X and Y-axis position 201Y of the master device 201 as X and Y, as shown in FIG. 6(B).

$$Sx1 = K_{xx} \times X + K_{xy} \times Y + O_x$$
$$Sy1 = K_{yx} \times X + K_{yy} \times Y + O_y \quad \dots \text{(Eq. 2)}$$

(Here, $K_{xx}$, $K_{xy}$, $K_{yx}$ and $K_{yy}$ represent coefficients of the axes and $O_x$ and $O_y$ represent offset values of the axes.)

Meanwhile, the equations (Eq. 2) represent a calculation of performing rotation around the Z axis and parallel movement in the X and Y axes for the X-axis position 201X and Y-axis position 201Y of the master device 201.

Thereafter, the synchronization computing unit 32 performs synchronization computation (which is represented as a sign S2) for maintaining the position of the master device 201 and the position of the slave device 202 in a predetermined corresponding relation for coordinate transformation result values (Sx1 and Sy1) obtained through the coordinate transformation S1.

In this example, it is assumed that the predetermined corresponding relation is a relation in which the slave device 202 (X-Y table 220) accelerates and catches up to be positioned immediately under a workpiece 190 carried by the master device 201 (robot 211) and moves in synchronization with the workpiece 190 after catching up. Here, result values from the synchronization computation S2 are obtained as represented by curves 202x and 202y drawn with a thick solid line in (C) of FIG. 6, for example. These curves 202x and 202y respectively represent positions to be taken by the x axis and y axis of the slave device 202. Meanwhile, a thin solid line in (C) of FIG. 6 represents a portion of the coordinate transformation result values (Sx1 and Sy1) before the slave device 202 (X-Y table 220) catches up just under the workpiece 190 for comparison.

Thereafter, the slave device command value computing unit 40 receives signals representing the curves 202x and 202y from the synchronization computing unit 32 and updates the command value CVn for each axis of the slave device 202.

In this example, the slave device 202 receives the signals representing the command values CVn through the servo amplifiers 223 and 224 and, as represented by an arrow B1 in FIG. 5, the slave device 202 (X-Y table 220) accelerates and catches up with respect to the x axis and the y axis in synchronization with changes in the position of the master device 201 (i.e., movement of the workpiece 190 represented by an arrow A1) and moves in synchronization with the workpiece 190 after catching up.

In the case of such operation, when the number m of axes of the master device 201 (m=6 in this example) is larger than the number n of axes of the slave device 202 (n=2 in this example) as in this example, the amount of calculations for the synchronization computation S2 is reduced because the number n of axes of the slave device 202 is relatively small.

As is apparent from the above description, according to the control device 10, it is possible to increase a degree of freedom of the position of the slave device or to reduce the amount of calculations for synchronization computation when the number of axes of the master device differs from the number of axes of the slave device.

The above-described control device 10 can be substantially configured using a computer device (e.g., a programmable logic controller (PLC) of the like). Accordingly, it is desirable to configure the control method (the process of performing the coordinate transformation S1 and then performing the synchronization computation S2) described as the operation of the central computing unit 30 as programs executed by a computer. In addition, it is desirable to record such programs in a computer-readable non-transitory recording medium. In such a case, it is possible to implement the above-described control method by causing a computer device to read and execute such programs recorded in a recording medium.

In the above-described first embodiment, it is assumed that the master device 101 is a 1-axis conveyor belt and the slave device 102 is a 6-axis robot. In addition, in the second embodiment, it is assumed that the master device 201 is a 6-axis robot and the slave device 202 is a 2-axis X-Y table. However, the present invention is not limited thereto. For example, devices having various numbers m and n of axes, such as a 1-axis device like a conveyor belt, a 2-axis device like an X-Y table, a 4-axis device like a 4-axis parallel link robot, a 5-axis device like a 5-axis horizontal articulated robot, and a 6-axis device like a 6-axis articulated robot, can be objects for a master device and a slave device. However, the present invention is applied in cases in which the number m of axes of a master device differs from the number n of axes of a slave device.

[Reference Signs List]

| 10 | Control device |
| 30 | Central computing unit |
| 31 | Coordinate transformation unit |
| 32 | Synchronization computing unit |
| 100, 200 | Control system |
| 101, 201 | Master device |
| 102, 202 | Slave device |

**Claims**

1. A control device (10) for synchronizing and controlling a master device (101) and a slave device (102) at a fixed period, **characterized in that** the number of axes of the master device (101) is larger than the number of axes of the slave device (102), the control device (10) comprising :

   a computing unit (30) which obtains a command value (CVn) for each axis of the slave device (102) through computation at the fixed period based on a command value (CVm) for each axis or a measured current value (CVm') of each axis of the master device (101),
   wherein the computing unit comprises:

   a coordinate transformation unit (31) which performs coordinate transformation from a coordinate system of the master device (101) into a coordinate system of the slave device (102) for the command value (CVm) for each axis or the measured current value of each axis of the master device (101) at the fixed period; and
   a synchronization computing unit (32) which performs synchronization computation for maintaining the position of the master device (101) and the position of the slave device (102) in a predetermined corresponding relation for coordinate transformation result values obtained through the coordinate transformation.

2. A control method for obtaining a command value (CVn) for each axis of a slave device (102) through computation at a fixed period based on a command value (CVm) for each axis or a measured current value of each axis of a master device (101) and synchronizing and controlling the master device (101) and the slave device (102), **characterized in that** the number of axes of the master device (101) is larger than the number of axes of the slave device (102), , the control method comprising :

performing coordinate transformation from a coordinate system of the master device (101) into a coordinate system of the slave device (102) for the command value (CVm) for each axis or the measured current value (CVm') of each axis of the master device (101) at the fixed period; and then
performing synchronization computation for maintaining the position of the master device (101) and the position of the slave device (102) in a predetermined corresponding relation for coordinate transformation result values obtained through the coordinate transformation.

3. A program, **characterized in that**, the program causes a computer to execute the control method according to claim 2.

**Patentansprüche**

1. Steuervorrichtung (10) zum Synchronisieren und Steuern einer Master-Vorrichtung (101) und einer Slave-Vorrichtung (102) in einer festgelegten Periode, **dadurch gekennzeichnet, dass** die Anzahl der Achsen der Master-Vorrichtung (101) größer als die Anzahl der Achsen der Slave-Vorrichtung (102) ist, wobei die Steuervorrichtung (10) umfasst:

eine Recheneinheit (30), die einen Befehlswert (CVn) für jede Achse der Slave-Vorrichtung (102) erhält durch Berechnung bei der festgelegten Periode auf der Grundlage eines Befehlswerts (CVm) für jede Achse oder eines gemessenen aktuellen Werts (CVm') jeder Achse der Master-Vorrichtung (101), wobei die Recheneinheit umfasst:

eine Koordinatentransformationseinheit (31), die eine Koordinatentransformation von einem Koordinatensystem der Master-Vorrichtung (101) in ein Koordinatensystem der Slave-Vorrichtung (102) für den Befehlswert (CVm) für jede Achse oder den gemessenen aktuellen Wert jeder Achse der Master-Vorrichtung (101) in der festgelegten Periode durchführt; und eine Synchronisationsrecheneinheit (32), die eine Synchronisationsberechnung zum Aufrechterhalten der Position der Master-Vorrichtung (101) und der Position der Slave-Vorrichtung (102) in einer vorbestimmten entsprechenden Beziehung durchführt für durch die Koordinatentransformation erhaltene Ergebniswerte der Koordinatentransformation.

2. Steuerverfahren zum Erhalten eines Befehlswerts (CVn) für jede Achse einer Slave-Vorrichtung (102) durch Berechnung in einer festgelegten Periode auf der Grundlage eines Befehlswerts (CVm) für jede Achse oder eines gemessenen aktuellen Werts jeder Achse einer Master-Vorrichtung (101) und Synchronisieren und Steuern der Master-Vorrichtung (101) und der Slave-Vorrichtung (102), **dadurch gekennzeichnet, dass** die Anzahl der Achsen der Master-Vorrichtung (101) größer als die Anzahl der Achsen der Slave-Vorrichtung (102) ist, wobei das Steuerverfahren umfasst:

Durchführen einer Koordinatentransformation von einem Koordinatensystem der Master-Vorrichtung (101) in ein Koordinatensystem der Slave-Vorrichtung (102) für den Befehlswert (CVm) für jede Achse oder den gemessenen aktuellen Wert (CVm') jeder Achse der Master-Vorrichtung (101) in der festgelegten Periode; und dann Durchführen von Synchronisationsberechnungen zur Aufrechterhaltung der Position der Master-Vorrichtung (101) und der Position der Slave-Vorrichtung (102) in einer vorbestimmten entsprechenden Beziehung für durch die Koordinatentransformation erhaltene Ergebniswerte der Koordinatentransformation.

3. Programm, **dadurch gekennzeichnet, dass** das Programm einen Computer veranlasst, das Steuerungsverfahren gemäß Anspruch 2 auszuführen.

**Revendications**

1. Dispositif de commande (10) pour synchroniser et commander un dispositif maître (101) et un dispositif esclave (102) à une période fixe, **caractérisé en ce que** le nombre d'axes du dispositif maître (101) est supérieur au nombre d'axes du dispositif esclave (102), le dispositif de commande (10) comprenant :

une unité de calcul (30) qui obtient une valeur de commande (CVn) pour chaque axe du dispositif esclave (102) par un calcul à la période fixe sur la base d'une valeur de commande (CVm) pour chaque axe ou une valeur actuelle mesurée (CVm') de chaque axe du dispositif maître (101),

dans lequel l'unité de calcul comprend :

une unité de transformation de coordonnées (31) qui réalise une transformation de coordonnées depuis un système de coordonnées du dispositif maître (101) dans un système de coordonnées du dispositif esclave (102) pour la valeur de commande (CVm) pour chaque axe ou la valeur actuelle mesurée de chaque axe du dispositif maître (101) à la période fixe ; et
une unité de calcul de synchronisation (32) qui réalise un calcul de synchronisation pour maintenir la position du dispositif maître (101) et la position du dispositif esclave (102) dans une relation correspondante prédéterminée pour des valeurs de résultat de transformation de coordonnées obtenues par la transformation de coordonnées.

2. Procédé de commande pour obtenir une valeur de commande (CVn) pour chaque axe d'un dispositif esclave (102) par un calcul à une période fixe sur la base d'une valeur de commande (CVm) pour chaque axe ou une valeur actuelle mesurée de chaque axe d'un dispositif maître (101) et la synchronisation et la commande du dispositif maître (101) et du dispositif esclave (102),
**caractérisé en ce que** le nombre d'axes du dispositif maître (101) est supérieur au nombre d'axes du dispositif esclave (102),
le procédé de commande comprenant :

la réalisation d'une transformation de coordonnées depuis un système de coordonnées du dispositif maître (101) dans un système de coordonnées du dispositif esclave (102) pour la valeur de commande (CVm) pour chaque axe ou la valeur actuelle mesurée (CVm') de chaque axe du dispositif maître (101) à la période fixe ; puis
la réalisation d'un calcul de synchronisation pour maintenir la position du dispositif maître (101) et la position du dispositif esclave (102) dans une relation correspondante prédéterminée pour des valeurs de résultat de transformation de coordonnées obtenues par la transformation de coordonnées.

3. Programme, **caractérisé en ce que** le programme amène un ordinateur à exécuter le procédé de commande selon la revendication 2.

FIG. 1

EP 3 540 537 B1

FIG. 2

EP 3 540 537 B1

(A)

Master device position

101X

Time

Coordinate
transformation

~S1

(B)

Coordinate transformation
result value

x axis

Sx

y axis

Sy

Time

z axis

Sz

Synchronization
computation

~S2

(C)

Slave device position

x axis

102x

y axis

102y

Time

z axis

102z

FIG. 3

FIG. 4

FIG. 5

EP 3 540 537 B1

(A)

Master device position

X axis
201X
Time

Y axis
201Y

Z axis
201Z

Coordinate
transformation
S1

(B)

Coordinate transformation
result value

Sx1
x axis
Time

y axis
Sy1

Synchronization
computation
S2

(C)

Slave device position

x axis
202x
Time

y axis
202y

FIG. 6

**EP 3 540 537 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06138920 B

- EP 3282220 A